# EUROPEAN PATENT APPLICATION

(11) **EP 1 090 712 A2**
(43) Date of publication of application: **11.04.2001**
(21) Application number: 00308773.1
(22) Date of filing: 05.10.2000
(51) Int. Cl.: B23Q 5/34

(54) **Linearly reciprocating conveyor**

(30) Priority: 06.10.1999 JP 28561699
(71) Applicant: Infom Co. Ltd., Ichinomiya City, Aichi Pref. (JP)
(72) Inventor: Ito, Takayoshi, Ichinomiya City, Aichi pref (JP)
(74) Representative: Cheyne, John Robert Alexander Mackenzie

(57) **Abstract**

A linearly reciprocating conveyor (1) including a reciprocating table (3) movable along a predetermined linear path, a driving motor (2) mounted on the table (4) for movement therewith and having a driving shaft (6), a gear housing (9) mounted on the table (3) for movement therewith and having a mounting space (7), a toothed driving wheel (5) attached to the driving shaft (6) for rotation therewith and disposed in the mounting space (7), a pair of idler wheels (8) rotatably secured to the gear housing (9) and disposed in the mounting space (7), the idler wheels (8) being arranged along the path on both sides of the toothed driving wheel (5) and a synchronous wrapping connector (4) extending along the path and supported in meshing engagement with the toothed driving wheel (5) and the idler wheels (8), so that the reciprocating table (3) is moved along the path upon driving of the driving motor (2).

## Description

### BACKGROUND OF THE INVENTION

### 1. Field of the Invention:

The present invention relates to a linearly reciprocating conveyor for linearly conveying a material to be conveyed such as a chucker or a piece of work, which conveyor has extensive application in various industrial equipments.

### 2. Description of Prior Art:

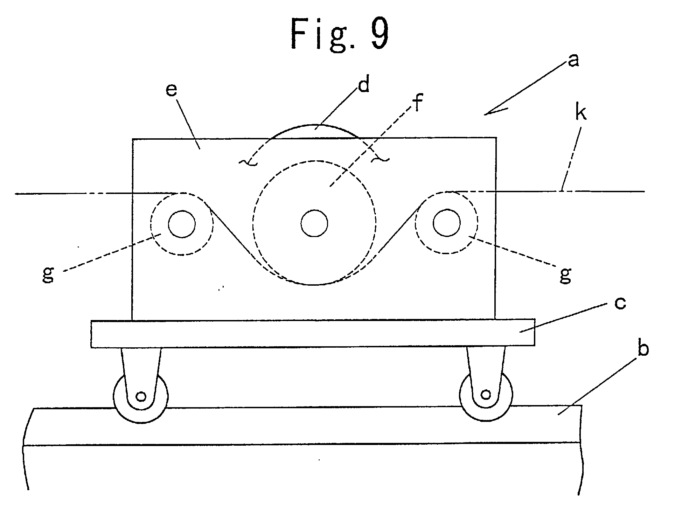

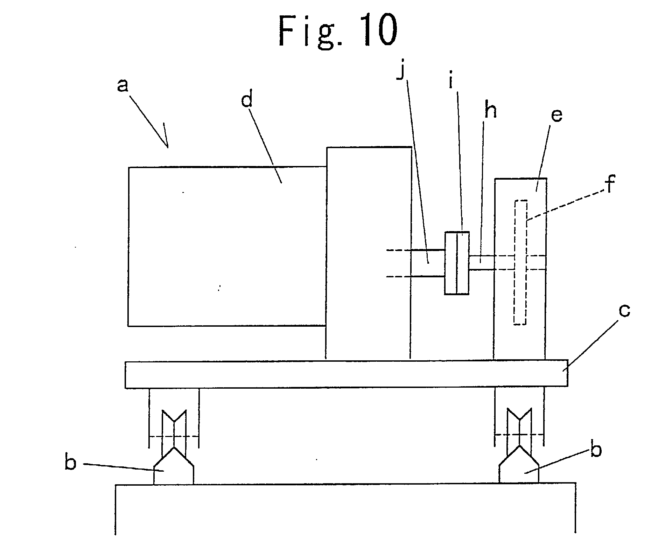

A linearly reciprocating conveyor is a kind of conveyor in which a self-moving reciprocating table, on which a material to be conveyed is mounted, is reciprocated by rotational movement of a toothed driving wheel engaged with a synchronous wrapping connector extending along the direction of the movement of the reciprocating table. Figs. 9 and 10 depict one known linearly reciprocating conveyor for linearly conveying a material to be conveyed. The linearly reciprocating conveyor, generally designated as (a), includes a driving motor (d) and a gear housing (e) secured on a reciprocating table (c) which moves on linear guide rails (b). The gear housing (e) accommodates a toothed driving wheel (f) and idler wheels (g) and (g) placed at the right and left sides of the toothed driving wheel (f), respectively. The toothed driving wheel (f) has a driving shaft (h) protruded from the gear housing (e) and connected to a driving shaft (i) of the driving motor (d) by means of a coupling (i). A synchronous wrapping connector (k) extends along the direction of the movement of the reciprocating table (c) with the sprockets (g), (f) and (g) being in meshing engagement therewith. The toothed driving wheel (f) is rotatably driven by the driving force of the driving motor (d) so that the reciprocating table (c) is reciprocated.

In assembling such a prior art linearly reciprocating conveyor (a), the toothed driving wheel (f) is initially incorporated in the gear housing (e). The driving shaft (h) of the toothed driving wheel (f) and the driving shaft (i) of the driving motor (e) are then connected by means of the coupling (i). However, in the connection by means of the coupling (i), the axes of the driving shaft (h) and the driving shaft (i) need to be aligned with high accuracy of, for example, 1/100 mm. The alignment is conventionally made by moving the gear housing (e) and the driving motor (d) vertically and horizontally. However, it is difficult to make fine adjustment with such an extremely accuracy. This makes the assembling very troublesome. Also, a space for disposing the coupling (i) must be provided between the gear housing (e) and the driving motor (d) so that the size of the whole equipment is unavoidably large.

### SUMMARY OF THE INVENTION

It is, therefore, an object of the present invention to provide a lineally reciprocating conveyor which has solved the above problems.

In accordance with the present invention there is provided a linearly reciprocating conveyor which comprises:
a reciprocating table movable along a predetermined linear path;
a driving motor mounted on the table for movement therewith and having a driving shaft;
a gear housing mounted on the table for movement therewith and having a mounting space;
a toothed driving wheel attached to the driving shaft for rotation therewith and disposed in the mounting space;
a pair of idler wheels rotatably secured to the gear housing and disposed in the mounting space, the idler wheels being arranged along the path on both sides of the toothed driving wheel; and
a synchronous wrapping connector extending along the path and supported in meshing engagement with the toothed driving wheel and the idler wheels, so that the reciprocating table is moved along the path upon driving of the driving motor.

Since the toothed driving wheel is directly mounted on the driving shaft of the driving motor, the troublesome task of alignment which is needed in case of employing a coupling is not at all necessary and, hence, the gear housing and the driving motor can be assembled with ease. Also, since the toothed driving wheel mounted on the driving shaft of the driving motor is inserted into the mounting space in the gear housing, the gear housing and the driving motor can be disposed adjacent each other so that the whole size of the equipment can be made compact. Additionally, since no coupling is employed, the equipment has a simple structure and permits easy maintenance.

The above conveyor may additionally include an adjusting member interposed between the reciprocating table and the gear housing for adjusting the height of the gear housing relative to the reciprocating table. By varying the height of the gear housing, the vertical positions of the idler wheels secured to the gear housing are also varied. Thus, the idler wheels can be set at suitable height relative to the toothed driving wheel secured on the reciprocating table through the driving shaft and the driving motor and accommodated in the gear housing. The idler wheels can be also set at suitable height in respect to the synchronous wrapping connector so that the wobbling of the synchronous wrapping connector in moving the reciprocating table is prevented and the reciprocating table can be moved smoothly and accurately in a stable manner.

### BRIEF DESCRIPTION OF THE DRAWINGS

Other objects, features and advantages of the present invention will become apparent from the detailed description of the preferred embodiments of the invention which follows, when considered in the light of the accompanying drawings, in which:
Fig. 1 is a cross-sectional, elevational view diagrammatically illustrating one embodiment of a linearly reciprocating conveyor according to the present invention;
Fig. 2 is an enlarged side view, partly in cross-section, of the conveyor of Fig. 1;
Fig. 3 is a plan view, partly in cross-section, of Fig. 2;
Fig. 4 is a fragmentary enlarged view showing a gear and synchronous wrapping connector arrangement of the conveyor of Fig. 1;
Fig. 5 is a sectional view taken alone V-V in Fig. 4;
Fig. 6 is a sectional view taken alone VI-VI in Fig. 4;
Fig. 7 is a sectional view taken alone VII-VII in Fig. 4;
Fig. 8 is a cross-sectional, elevational view diagrammatically illustrating another embodiment of a linearly reciprocating conveyor according to the present invention;
Fig. 9 is an elevational view schematically illustrating a conventional linearly reciprocating conveyor; and
Fig. 10 is a side view of the conveyor of Fig. 9

### DETAILED DESCRIPTION OF THE PREFERRED EMBODIMENTS OF THE INVENTION

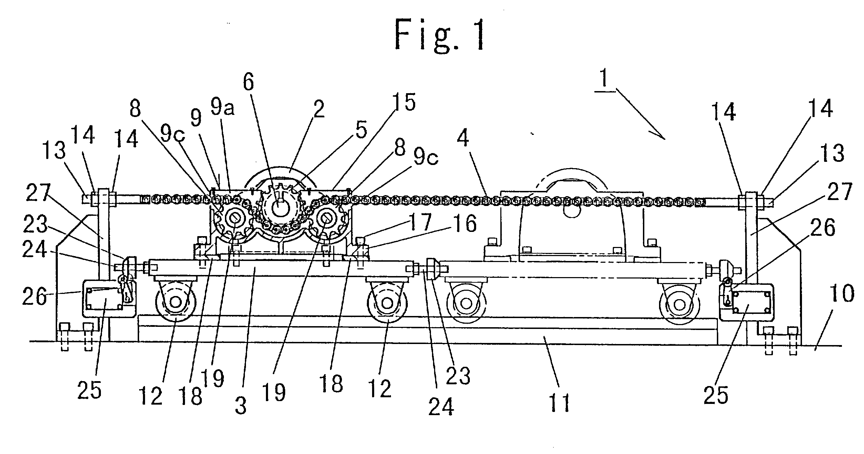

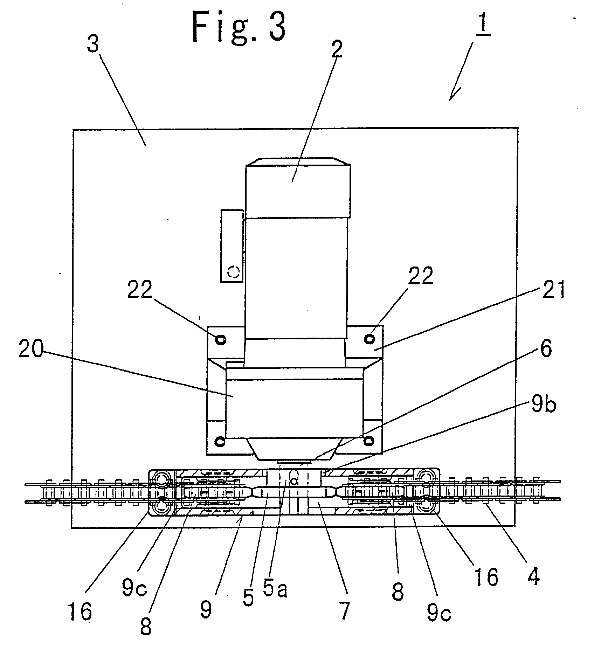

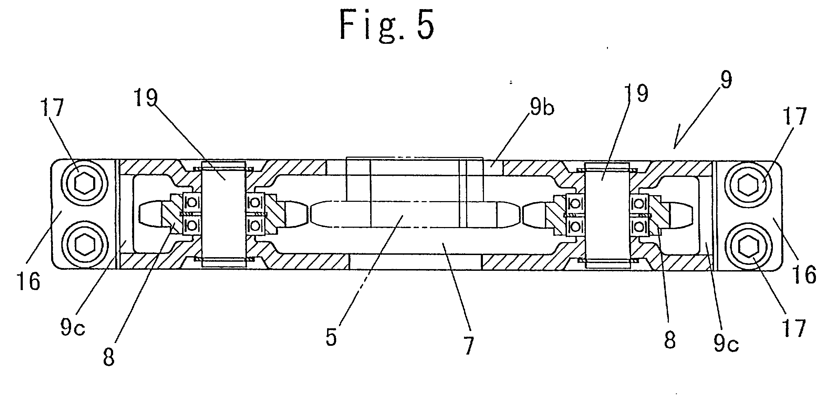

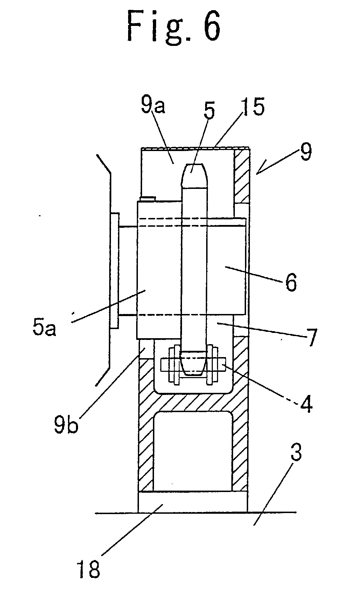

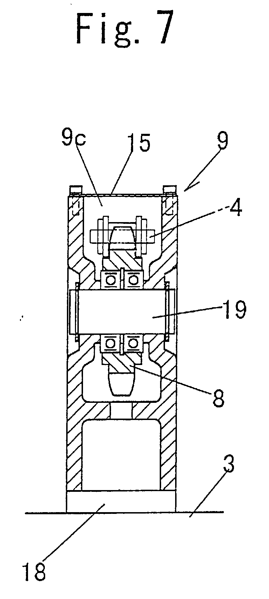

Referring to Fig. 1-7, a linearly reciprocating conveyor 1 according to the present invention includes a reciprocating table 3 movable along a predetermined linear path, a driving motor 2 mounted on the table 4 for movement therewith and having a driving shaft 6, a gear housing 9 mounted on the table 3 for movement therewith and having a mounting space 7, a toothed driving wheel 5 attached to the driving shaft 6 for rotation therewith and disposed in the mounting space 7, a pair of idler wheels 8 and 8 journaled on the gear housing 9 and disposed in the mounting space 7, the idler wheels 8 and 8 being arranged along the path on both sides of the toothed driving wheel 5, and a synchronous wrapping connector 4 extending along the path and supported in meshing engagement with the toothed driving wheel 5 and the idler wheels 8 and 8, so that the reciprocating table 3 is moved along the path upon driving of the driving motor 2.

At this embodiment ,the synchronous wrapping connector 4 is the chain ,the toothed driving wheel 5 is the driving sprocket wheel, and the idler wheels 8 and 8 is the idler sprockets.

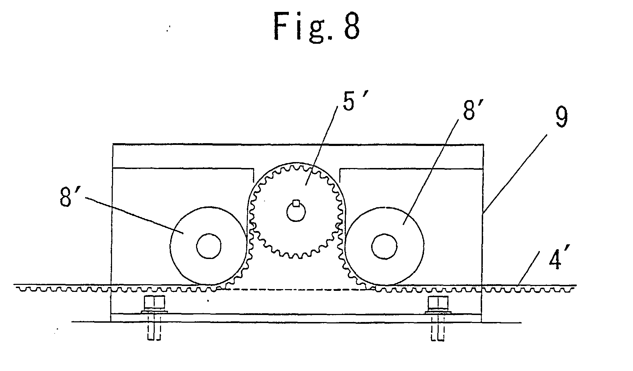

As show in Fig.8 for another embodiment, the synchronous wrapping connector 4' is toothed belt ,the toothed driving wheel 5' is the synchronous beltdriving wheel, and the idler wheels 8' and 8' is the pulleys.

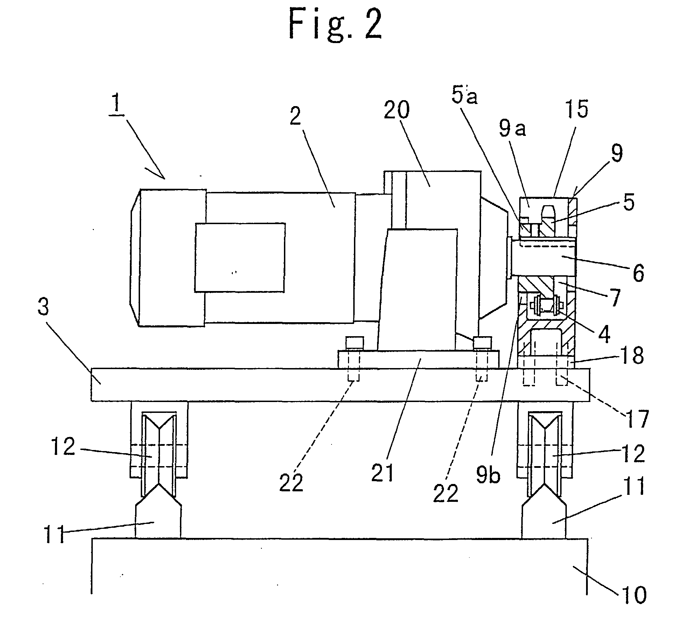

As shown in Figs. 1 and 2, the linearly reciprocating conveyor 1 has a base frame 10 on which a pair of parallel linear guide rails 11 and 11 are secured. The reciprocating table 3 has wheels 12 entrained on the guide rails 11 and 11 and is allowed to be moved along the rails 11 and 11, namely along the predetermined path.

On the base frame 10, a pair of right and left supporting arms 27 and 27 extending upwardly therefrom are also disposed at just the outside of the moving range of the reciprocating table 3. The synchronous wrapping connector 4 extends horizontally between upper portions of the supporting arms 27 and 27. In other words, the synchronous wrapping connector 4 extends along the path of the movement of the reciprocation table 3. The synchronous wrapping connector 4 is supported so as to engage with idler wheels 8 and 8 disposed within a gear housing 9 as described later.

The synchronous wrapping connector 4 has screw rods 13 and 13 on the opposite terminal ends which extend through holes of the supporting arms 27 and 27 respectively. Each of the screw rods 13 and 13 is attached to the supporting arms 27 and 27 respectively by means of a pair of front and rear nuts 14 and 14 screwed on each of the screw rods 13 and 13. The tension of the synchronous wrapping connector 4 can be adjusted by rotating the nuts 14 and 14 and the consequent shift of lateral position of the screw rod 13.

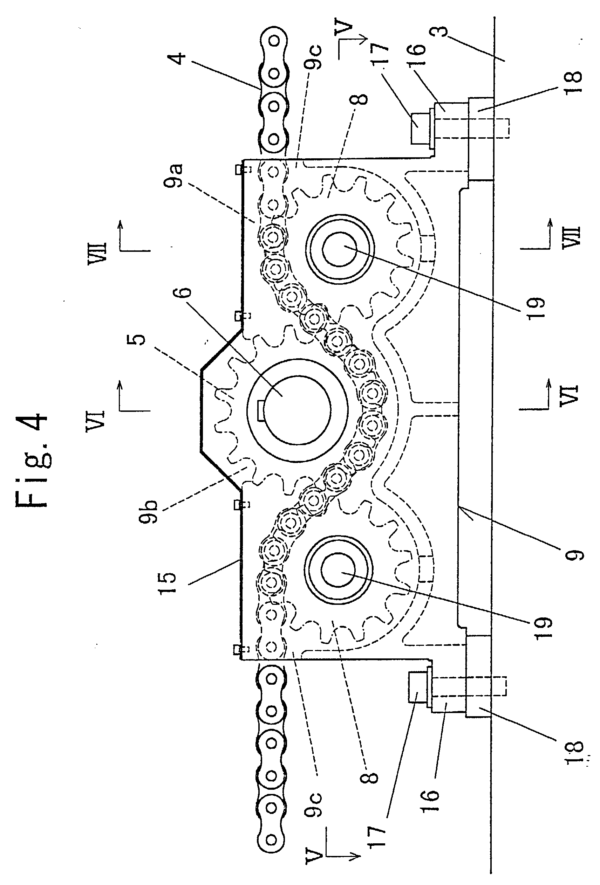

As shown in Fig. 4, the gear housing 9 is disposed in a position corresponding to the synchronous wrapping connector 4 on the reciprocating table 3. The gear housing 9 is constructed in an elongated box shape with the upper face open. The upper opening 9a is covered with a removable cover plate 15. The gear housing 9 has lugs 16 and 16 extending outwardly from the lower portion of the right and left side walls and is secured to the reciprocating table 3 by fixing the lugs 16 and 16 with bolts 17 and 17. Spacers 18 and 18 having a suitable thickness are interposed between the lower surface of the lugs 16 and 16 and the upper surface of the reciprocating table 3 respectively. The spacer 18 and 18 serve to function as means for adjusting the height of the gear housing 9. The height adjusting means may be tubular collars instead of the spacers 18.

The gear housing 9 has a mounting space 7 defined in the central portion thereof for accommodating a toothed driving wheel 5. Disposed also in the mounting space 7 are a pair of the right and left idler wheels 8 and 8 on both sides of the toothed driving wheel 5 symmetrically along the direction of the synchronous wrapping connector 4. The idler wheels 8 and 8 are mounted on shafts 19a and 19b, respectively, which in turn are journaled on the gear housing 9.

The rear wall of the gear housing 9 has a U-shaped opening 9b having a size sufficient for permitting a boss 5' of the toothed driving wheel 5 to be received therein when the toothed driving wheel 5 connected to the driving shaft 6 of the motor 2 is inserted in the mounting space 7. The gear housing 9 has right and left walls provided with openings 9c and 9c respectively at a position opposite the top periphery of each of the idler wheels 8 and 8 so that the synchronous wrapping connector 4 may pass through the openings 9c and 9c. All the openings 9c, 9c and 9b are open at the top so as to communicate with the upper opening 9a when the cover plate 15 is removed. As a result of this construction, it is easy to put the synchronous wrapping connector:4 and the toothed driving wheel 5 in the gear housing 9 from above.

On the reciprocating table 3, the driving motor 2 having a reduction mechanism 20 is secured at a position close behind the gear housing 9. The driving shaft 6 of the driving motor 2 extends forward from the reduction mechanism 20 in a direction perpendicular to the reciprocation path of the table 3, namely perpendicular to the synchronous wrapping connector 4. The toothed driving wheel 5 is mounted on the driving shaft 6 for rotation therewith. The driving motor 2 is secured to the reciprocating table 3 by fixing the mounting base 21 with bolts 22 and 22 with the toothed driving wheel 5 being accommodated in the gear mounting space 7 in the gear housing 9.

The synchronous wrapping connector 4 is in meshing engagement with the wheels 8, 5 and 8 in the gear housing 9. As shown in Fig. 1, the synchronous wrapping connector 4 is engaged with about lower half of the periphery of the toothed driving wheel 5 and an upper portion of the periphery of each of the idler wheels 8 and 8, and passes horizontally from the gear housing 9 through the synchronous wrapping connector openings 9c and 9c. Engaging the synchronous wrapping connector 4 with the wheels 8, 5 and 8 as above assures secure engagement of the synchronous wrapping connector 4 with the toothed driving wheel 5 and prevents the synchronous wrapping connector 4 from disengaging therefrom.

The reciprocating table 3 has rods 24 and 24 having detectors 23 and 23, respectively. The supporting arms 27 and 27 are provided with limit switches 25 and 25, respectively at the position corresponding to the detector rods 24 and 24. When one of the detectors 23 and 23 of the detector rods 24 and 24 contacts a switch arm 26 of either of the limit switches 25 and 25 due to a movement of the reciprocating table 3, a sensing signal is delivered to a controller (not shown), which then stops the reciprocating table 3 by stopping the rotation of the driving motor 2. The range of movement of the reciprocating table 3 is thus limited.

In assembling, the cover plate 15 of the gear housing 9 is removed to open the upper opening 9a. The toothed driving wheel 5 mounted on the driving shaft 6 of the driving motor 2 is inserted into the mounting space 7 in the gear housing 9 from above the gear housing 9. Since the rear wall of the gear housing 9 has the opening 9b, the boss 5a of the toothed driving wheel 5 is accommodated in the gear opening 9b to permit the driving motor 2 to be located horizontally toward the rear of the gear housing 9 with no difficulty.

At this time, the synchronous wrapping connector 4 may be spanned between the openings 9c and 9c of the gear housing 9 in advance and the toothed driving wheel 5 may be inserted into the mounting space 7 from above as described above so that the synchronous wrapping connector 4 can be meshed with the wheels 8, 5 and 8 simultaneously.

Then the base 21 of the driving motor 2 is fixed to the reciprocating table 3 with bolts 22 and 22 and the cover plate 15 is fixed to cover the opening 9a of the gear housing 9. In the case where the vertical position of the idler wheels 8 and 8 relative to the toothed driving wheel 5 in the gear housing 9 need to be adjusted, height adjusting means such as spacers 18 or collars having a suitable thickness are interposed between the lugs 16 and 16 of the gear housing 9 and the upper surface of the reciprocating table 3. Thus, the toothed driving wheel 5 can be set at a desirable height in respect to the idler wheels 8 and 8. The tension of the synchronous wrapping connector 4 is adjusted by moving the screw rods 13 and 13 on opposed ends thereof extending through the supporting arms 27 and 27 in forward or reverse direction through rotating the nuts 14 and 14.

In the lineally reciprocating conveyor 1, the speed and direction of rotation of the driving shaft 6 of the driving motor 2 are controlled by a controller (not shown). Then the toothed driving wheel 5 mounted on the driving shaft 6 is rotatably driven by the controlled rotation of the driving motor 2. Since the synchronous wrapping connector 4 is engaged with the toothed driving wheel 5, the reciprocating table 3 reciprocates linearly on the guide rails 11 and 11. As a result, a material to be conveyed such as a chucker or a piece of work mounted on the reciprocating table 3 is linearly reciprocated.

A difference in height between the opposed ends of the synchronous wrapping connector 4 and the engaging points thereof with the upper portion of the periphery of the idler wheels 8 and 8 would cause the synchronous wrapping connector 4 to wobble up and down along with the movement of the reciprocating table 3. In the case where such wobbling of the synchronous wrapping connector 4 needs to be prevented, the height of the gear housing 9 can be adjusted by adjusting means such as spacers 18 or collars interposed between the lower surface of the gear housing 9 and the upper surface of the reciprocating table 3 to set the idler wheels 8 and 8 at a suitable height in respect to the synchronous wrapping connector 4 in advance. The wobbling movement of the synchronous wrapping connector 4 is prevented so that the reciprocating table 3 can be moved with accuracy and stability.

The invention may be embodied in other specific forms without departing from the spirit or essential characteristics thereof. The present embodiments are therefore to be considered in all respects as illustrative and not restrictive, the scope of the invention being indicated by the appended claims rather than by the foregoing description, and all the changes which come within the meaning and range of equivalency of the claims are therefore intended to be embraced therein.

## Claims

1. A linearly reciprocating conveyor comprising:
a reciprocating table movable along a predetermined linear path;
a driving motor mounted on said table for movement therewith and having a driving shaft;
a gear housing mounted on said table for movement therewith and having a mounting space;
a toothed driving wheel attached to said driving shaft for rotation therewith and disposed in said mounting space;
a pair of idler wheels rotatably secured to said gear housing and disposed in said mounting space, said idler wheels being arranged along said path on both sides of said toothed driving wheel; and
a synchronous wrapping connector extending along said path and supported in meshing engagement with said toothed driving wheel and said idler wheels, so that said reciprocating table is moved along said path upon driving of said driving motor.

2. A conveyor as claimed in claim 1, further comprising an adjusting member interposed between said reciprocating table and said gear housing for adjusting the height of said gear housing relative to said reciprocating table.
